# EUROPEAN PATENT SPECIFICATION

(11) **EP 2 455 286 B1**
(45) Date of publication and mention of the grant of the patent: **28.09.2016**
(21) Application number: 10382307.6
(22) Date of filing: 22.11.2010
(51) Int. Cl.: B64D 45/02

(54) **Lightning protection for composite aircraft structures**
Blitzschutz für Flugzeugverbundstrukturen
Protection contre la foudre pour structures composites d'avions

(43) Date of publication of application: 23.05.2012
(73) Proprietor: Airbus Defence and Space SA, 28906 Getafe Madrid (ES)
(72) Inventor: Sequeiros Murciano, Felipe, 28906, Getafe, Madrid (ES); Cano Pérez, Fernando, 28906, Getafe, Madrid (ES); Quero Lopez, María Viñas, 28906, Getafe, Madrid (ES)
(74) Representative: Elzaburu Marquez, Alberto

(56) References cited:
- EP-A1- 0 685 389
- EP-A1- 0 976 652
- EP-A1- 2 202 336
- US-A1- 2009 227 162

## Description

### FIELD OF THE INVENTION

The invention relates to a lightning protection system for aircraft structures comprising a composite material, in particular in the joints of aircraft structures forming a fuel tank or enclosing ignitable vapours.

### BACKGROUND

At present, because of the massive use of composite materials in aircraft structures, and due to the low values of both the electrical and thermal conductivities of said composite materials when compared to conventional metallic structures, together with the high electrical resistance at the structural joints in aircraft structures made of these materials, sparking becomes a frequent phenomenon as a consequence of the lightning current passage through these structures, especially in cases where the composite materials form part of aircraft structures forming a fuel tank or enclosing ignitable vapours. Phenomena such as sparking or hot spot, which may be produced by a lightning strike on the aircraft structure, are especially dangerous when the structure is forming a fuel tank or enclosing ignitable vapours because they are potential ignition sources whenever the energy is enough to ignite the fuel vapours.

To minimise these effects several metallising techniques of the exposed composite structure as well as the implementation of conductive diverting systems at the structural joints have been used, as shown for example in documents ES2008432, ES2006356, EP0685389 or EP0976652.

In particular, documents EP0976652 and EP0685389 provide examples of lightning protection systems for fastening structural components in an aircraft, particularly components forming fuel deposits or tanks manufactured in composite material. These system comprise an internal part made of an isolating material and an external metallic layer located outside the fastening element.

One of the difficulties presented by these embodiments is that the metallic layer is applied manually, as it is difficult to integrate it within the automatic laminate lay-up system used in the aeronautical composite production, which makes the process costly. Besides, when the metallic layer is applied in the form of metallic strips at joints in the composite structure, there is a problem with the compatibility between the metallic material and the composite laminate in the structure, due to the differences of material properties. Additionally, some fasteners may not be adequate as they cause large quality control problems due to the fact that small defects in the installation may be critical for the protection method to be effective. Moreover, these embodiments also present the difficulty of making the composite structures heavy, which is a serious drawback in aeronautic structures, in which the minimisation of weight is a main object.

It shall then be desirable to provide a lightning protection system for aircraft structures made of composite material, that allows reducing both the amount of external surface metallising and the protection materials in the mentioned composite structures, also reducing the special precautions needed for a structural joint suffering lightning, therefore lighter structures being obtained. Besides, it shall be desirable to provide a system in which the lightning protection is applied automatically, within the automatic lay-up process. Moreover, a more homogeneous final structure is pursued.

The present invention is oriented to providing these features.

### SUMMARY OF THE INVENTION

Therefore, the invention relates to an aircraft structure according to claim 1.

The conductive nanoparticles will preferably be dispersed in a solution containing a resin formulation.

The lightning protection system of the invention acts as a diverting means, for conducting lightning currents away from the fastening element. The lightning protection system of the invention is preferably applied directly onto the exposed external surface of an aircraft structure comprising composite material.

One of the advantages of the lightning protection system of the invention is that it can comprise materials which are fully compatible with aeronautical composite materials, thus a more homogeneous structure being obtained.

Also, the system of the invention is much lighter than the known metallising structures of the prior art, since the amount of metallising needed to provide the same level of lightning protection is much lower.

A further advantage is the industrialization capability of the process for manufacturing the system according to the invention, due to the automatic nature of the process used for the deposition of conductive nanoparticles.

The features, objects and advantages of the invention will become apparent by reading this description in conjunction with the accompanying drawing.

### BRIEF DESCRIPTION OF DRAWINGS

Figure 1 shows a general view of the lightning protection system used in composite aircraft structures, according to the present invention.
Figures 2a and 2b schematically show different steps in the fabrication procedure of epoxy nanofibres reinforced with carbon nanotubes and other conductive nanoparticles, as developed in EP 2022336.
Figure 3 shows a general view of a second embodiment of a lightning protection system used in composite aircraft structures, according to the invention.

### DETAILED DESCRIPTION OF PREFERRED EMBODIMENTS

Thus, the invention refers to a lightning protection system 1 for aircraft structures comprising a composite material and forming a fuel tank or enclosing ignitable vapours, in particular in the joint of structures 62, 63. The system 1 of the invention aims at providing lightning protection to the areas surrounding a fastening element 4, such that the fastening element 4 attaches an internal structure 63 to an external structure 62 of the aircraft.

The lightning protection system 1 of the invention comprises at least one conductive layer 2 or 3 embedded in the matrix of the composite material forming the aircraft structure, in proximity to a fastening element 4. The lightning protection system 1 may comprise only one conductive layer 2, covering an area of the structure for which lightning protection is sought , this layer 2 comprising conductive nanoparticles dispersed within its structure, such that the properties of this layer 2 against lightning are improved. In another embodiment of the invention, the system 1 comprises only one conductive layer 3, this layer 3 limited to a region around the fastening element 4, preferably in the form of a conductive strip disposed along a row of fastening elements 4. This layer 3 comprises conductive nanoparticles dispersed within its structure, such that lightning protection properties are improved also, as in the previously mentioned embodiment.

Another embodiment of the invention comprises two conductive layers, 2 and 3, such that either 2, or 3 or both comprise conductive nanoparticles dispersed.

In all the embodiments mentioned, each of the layers 2 or 3 can be made of nanofibres comprising conductive nanoparticles, or can be made of a metallic layer comprising conductive nanoparticles, embedded within its structure. However, if one of the layers, 2 or 3, comprises both conductive nanoparticles and a metallic layer, this metallic layer is thinner than the one in the configurations known of the prior art, as the conducting properties and lightning protection capability are improved by the conducting nanoparticles, dispersed, therefore a lighter structure being obtained. This means that, according to the conducting grade or lightning protection level required in the system 1, provided by the conductive nanoparticles, only one conductive layer, 2 or 3, may be needed, thus avoiding one of the layers, with the resulting benefit in weight, or two layers are provided, 2 and 3, whereas the metallic mesh within said layers, 2 and 3, is reduced, either totally or partially.

In a further preferred embodiment, one of the layers 2 or 3 or both layers consist of a metallic mesh preimpregnated with a matrix comprising conductive nanoparticles, the matrix being for example made of an epoxy resin and the conductive nanoparticles being for example carbon nanotubes.

The conductive nanoparticles in the conductive layers 2, 3 are applied by an automatic process using an injection system with a grounded collector, wherein there is a relative motion of the collector with respect to the injection system, integrated in the automatic lay-up process of manufacturing the external 62 structure of the aircraft, made in composite material.

Some non limiting examples of conductive nanoparticles which are suitable for being used in this system are silver wrinkles, metallic nanospheres or carbon nanotubes.

At least one of the conductive layers 2 or 3 comprises a layer of super-conducting carbon microfibres, produced from graphitisation of nanofibers of a precursor polymer containing conducting nanoparticles, wherein the polymer nanofibers can be polyacrylonitrile-PAN nanofibers and the conductive nanoparticles being carbon nanotubes.

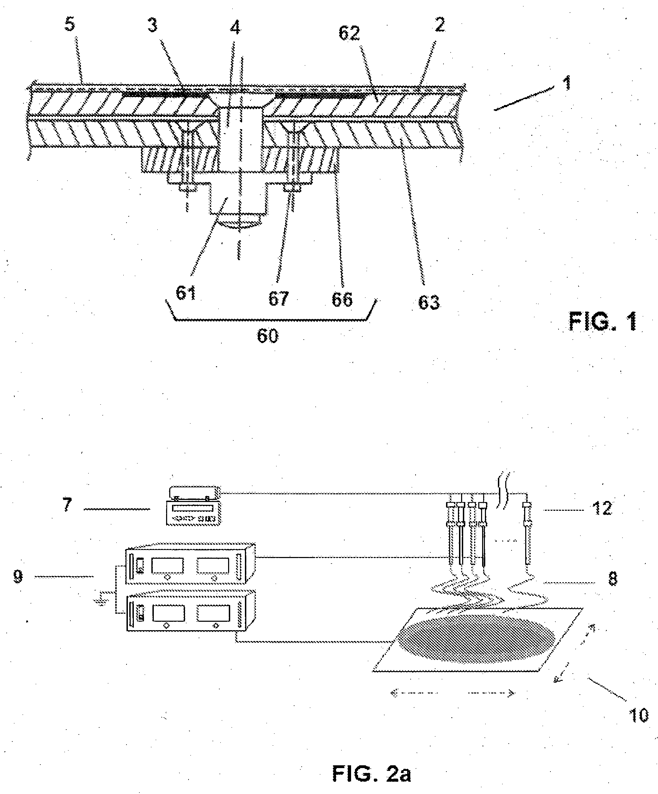

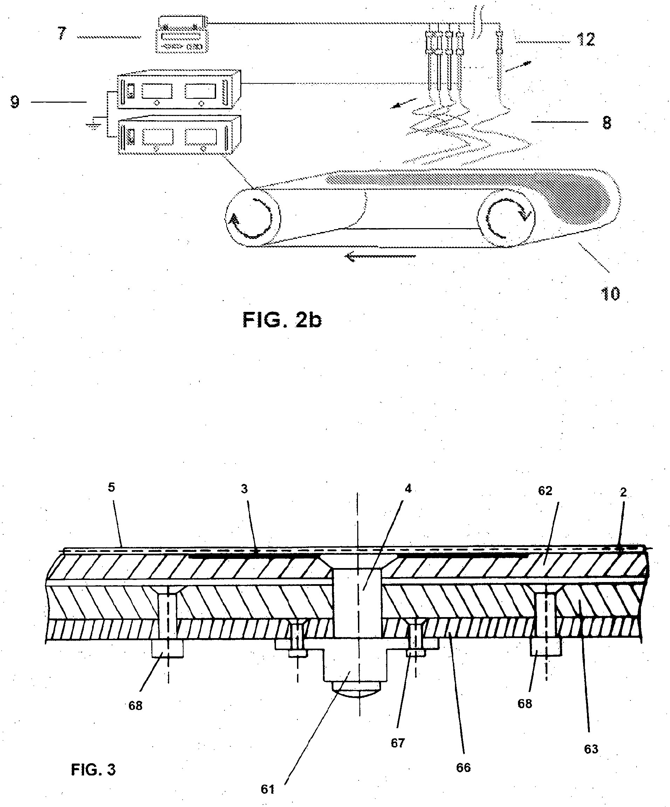

Therefore, the invention refers to a particular utilization of the deposition process of epoxy nanofibres reinforced with carbon nanotubes and other conductive nanoparticles, these nanofibres being developed by using the method described in the document EP 2 202 336, of the same applicant, published on 30/10/2010, wherein doped nanofibres of epoxy resin are generated by a process of electro-spinning and then are applied in the lightning protection system 1 to improve its performance against pulses of very high energy as in the case of current from lightning that attaches to fastening elements (see Figures 2a and 2b).

The structure of the system 1 obtained according to the invention can vary its thickness in a range comprised between 10 µm to 100 µm.

Preferably, conductive nanoparticles comprise carbon nanotubes. Moreover, because of their special molecular configuration, both single walled carbon nanotubes and multiple walled carbon nanotubes can be used, as they exhibit extremely high values of both electrical and thermal conductivities. Therefore, the dispersion of carbon nanotubes into carbon fibre composite materials is a good alternative for the improvement of the electrical and thermal characteristics of these materials.

Besides, the lightning protection system 1 comprises an isolating fixing device 60 provided in the internal part of the internal structure 63 of the aircraft, facing the inside of the fuel tank or compartment enclosing ignitable vapours. The fixing device 60 comprises a nut 61, preferably covered with insulating material, an insulating layer 66, for example in the form of a washer, separating the nut 61 from the internal structure 63, and fastening means 67 fixing the nut 61 to the internal structure 63. Preferably, the lightning protection system 1 also comprises an organic finish 5 made of organic material, externally added to the external layer 2 of the external structure 62. If a simple nut 61 is used, instead of an anchor nut (as shown in the embodiment of Figure 1), the fastening means 67 will then be suppressed.

As it has been described, in the embodiment of Figure 1 of the invention, the layer 66 is non-conductive, being made of isolating material, and the nut 61 is covered with an isolating material. This configuration provides a double isolation barrier to avoid that current from lightning that attaches to fastening elements will not take the path through the fastener into the inside of the structure, instead being dispersed throughout the external composite structure thanks to the conductive layers 2, 3 provided.

As it is shown in Figure 3, another embodiment of the system 1 of the invention would be made with double security, where the nut 61 is attached to the insulating layer 66 by means of fastening means 67, the insulating layer 66 being attached to the internal structure 63 by additional fastening means 68. This configuration provides a double isolation barrier to avoid a path for the current into the inside of the structure, that could occur in a case in which the isolation of the nut 61 fails.

Although the present invention has been fully described in connection with preferred embodiments, it is evident that modifications may be introduced within the scope thereof, not considering this as limited by these embodiments, but by the contents of the following claims.

## Claims

1. Aircraft structure comprising an internal structure (63), an external structure (62) made of a composite material, and a lightning protection system (1), said lightning protection system (1) comprising a fastening element (4) for attaching the internal structure (63) to the external structure (62), the lighting protection system (1) being suitable for providing lightning protection to areas surrounding the fastening element (4), the system (1) also comprising at least one conductive layer (2, 3) in proximity to the fastening element (4), **characterized in that** the conductive layer (2, 3) embedded in the matrix of said composite material and comprises conductive nanoparticles dispersed within its structure, wherein the nanoparticles dispersed within its structure are applied by an automatic process using an injection system with a grounded collector, wherein there is a relative motion of the collector with respect to the injection system integrated in the automatic lay-up process of manufacturing the external structure of the aircraft made in composite material and wherein at least one of the conductive layers (2, 3) comprises a layer of super-conducting carbon microfibres, produced from graphitisation of nanofibers of a precursor polymer containing conductive nanoparticles.

2. Aircraft structure according to the previous claim, wherein the conductive nanoparticles have been dispersed in a solution containing a resin formulation.

3. Aircraft structure according to any of the previous claims, wherein the at least one conductive layer (3) is limited to a region around the fastening element (4), to disperse the current from lightning strikes to the fastening element (4) throughout the composite material.

4. Aircraft structure according to any of the previous claims, wherein the at least one conductive layer (3) is a conductive strip disposed along a row of fastening elements (4).

5. Aircraft structure according to any of the previous claims, wherein at least one conductive layer (2, 3) comprises a metallic material in the form of a metallic mesh.

6. Aircraft structure according to any of any of the previous claims, comprising at least two conductive layers (2, 3), a first external conductive layer (2) disposed on substantially the whole external surface of the composite material, and a second conductive layer (3) limited to a region around the fastening element (4), wherein at least one of the conductive layers (2, 3) comprises conductive nanoparticles dispersed within its structure.

7. Aircraft structure according to any of the previous claims wherein the matrix is an epoxy resin.

8. Aircraft structure according to any of the previous claims, wherein the conductive nanoparticles are selected from the group consisting of silver wrinkles, metallic nanospheres and carbon nanotubes.

9. Aircraft structure according to claim 1, wherein the polymer nanofibers are polyacrylonitrile-PAN nanofibers, the conductive nanoparticles being carbon nanotubes.

10. Aircraft structure according to any of the previous claims, wherein it further comprises an isolating fixing device (60) provided in the internal part of the internal structure (63) of the aircraft, the fixing device (60) comprising a nut (61) covered with insulating material.

11. Aircraft structure according to claim 10, wherein the fixing device (60) further comprises an insulating layer (66) separating the nut (61) from the internal structure (63), thereby providing a double isolating barrier to the lightning protection system (1).

12. Aircraft structure according to any of claims 10-11, wherein the nut (61) is attached to the internal structure (63) by means of fastening means (67).

13. Aircraft structure according to claim 11, wherein the nut (61) is attached to the insulating layer (66) by means of fastening means (67), the insulating layer (66) being attached to the internal structure (63) by additional fastening means (68).

## Patentansprüche

1. Flugzeugstruktur, die eine Innenstruktur (63), eine Außenstruktur (62), die aus einem Verbundmaterial hergestellt ist, und ein Blitzschutzsystem (1) umfasst, wobei das Blitzschutzsystem (1) ein Befestigungselement (4) zum Anbringen der Innenstruktur (63) an der Außenstruktur (62) umfasst, wobei das Blitzschutzsystem (1) zum Bereitstellen eines Blitzschutzes für Bereiche geeignet ist, die das Befestigungs-element (4) umgeben, wobei das System (1) auch mindestens eine leitende Schicht (2, 3) in der Nähe des Befestigungselements (4) umfasst, **dadurch gekennzeichnet, dass** die leitende Schicht (2, 3) in der Matrix des Verbundmaterials eingebettet ist und leitende Nanoteilchen umfasst, die innerhalb deren Struktur dispergiert sind, wobei die Nanoteilchen, die innerhalb deren Struktur dispergiert sind, durch ein automatisches Verfahren unter Verwendung eines Injektionssystems mit einem geerdeten Kollektor aufgebracht worden sind, wobei eine Relativbewegung des Kollektors in Bezug auf das Injektionssystem in den automatischen Lagenschichtungsvorgang der Herstellung der Außenstruktur des Flugzeugs, die mit einem Verbundmaterial hergestellt ist, integriert ist, und wobei mindestens eine der leitenden Schichten (2, 3) eine Schicht aus supraleitenden Kohlenstoff-Mikrofasern umfasst, die durch eine Graphitisierung von Nanofasern eines Vorstufenpolymers hergestellt worden sind, das leitende Nanoteilchen enthält.

2. Flugzeugstruktur nach dem vorhergehenden Anspruch, bei der die leitenden Nanoteilchen in einer Lösung dispergiert worden sind, die eine Harzformulierung enthält.

3. Flugzeugstruktur nach einem der vorhergehenden Ansprüche, bei der die mindestens eine leitende Schicht (3) auf einen Bereich um das Befestigungselement (4) beschränkt ist, so dass der Strom von Blitzeinschlägen in das Befestigungselement (4) innerhalb des Verbundmaterials verteilt wird.

4. Flugzeugstruktur nach einem der vorhergehenden Ansprüche, bei der die mindestens eine leitende Schicht (3) ein leitender Streifen ist, der entlang einer Reihe von Befestigungselementen (4) angeordnet ist.

5. Flugzeugstruktur nach einem der vorhergehenden Ansprüche, bei der mindestens eine leitende Schicht (2, 3) ein Metallmaterial in der Form eines Metallnetzes umfasst.

6. Flugzeugstruktur nach einem der vorhergehenden Ansprüche, die mindestens zwei leitende Schichten (2, 3), eine erste äußere leitende Schicht (2), die auf im Wesentlichen der gesamten Außenfläche des Verbundmaterials angeordnet ist, und eine zweite leitende Schicht (3) umfasst, die auf einen Bereich um das Befestigungs-element (4) beschränkt ist, wobei mindestens eine der leitenden Schichten (2, 3) leitende Nanoteilchen umfasst, die innerhalb deren Struktur dispergiert sind.

7. Flugzeugstruktur nach einem der vorhergehenden Ansprüche, bei der die Matrix ein Epoxyharz ist.

8. Flugzeugstruktur nach einem der vorhergehenden Ansprüche, bei der die leitenden Nanoteilchen aus der Gruppe, bestehend aus Silberflocken, Metall-Nanokügelchen und Kohlenstoff-Nanoröhrchen, ausgewählt sind.

9. Flugzeugstruktur nach Anspruch 1, bei der die Polymer-Nanofasern Polyacrylnitril-PAN-Nanofasern sind, wobei die leitenden Nanoteilchen Kohlenstoff-Nanoröhrchen sind.

10. Flugzeugstruktur nach einem der vorhergehenden Ansprüche, die ferner eine isolierende Fixiervorrichtung (60) umfasst, die in dem inneren Teil der Innenstruktur (63) des Flugzeugs bereitgestellt ist, wobei die Fixiervorrichtung (60) eine Mutter (61) umfasst, die mit einem isolierenden Material bedeckt ist.

11. Flugzeugstruktur nach Anspruch 10, bei der die Fixiervorrichtung (60) ferner eine isolierende Schicht (66) umfasst, welche die Mutter (61) von der Innenstruktur (63) trennt, wodurch eine doppelte Isolationsbarriere für das Blitzschutzsystem (1) bereitgestellt wird.

12. Flugzeugstruktur nach einem der Ansprüche 10 bis 11, bei der die Mutter (61) durch ein Befestigungsmittel (67) an der Innenstruktur (63) angebracht ist.

13. Flugzeugstruktur nach Anspruch 11, bei der die Mutter (61) an der isolierenden Schicht (66) durch ein Befestigungsmittel (67) angebracht ist, wobei die isolierende Schicht (66) durch ein zusätzliches Befestigungsmittel (68) an der Innenstruktur (63) angebracht ist.

## Revendications

1. Structure d'avion comprenant une structure interne (63), une structure externe (62) faite d'un matériau composite et un système de protection contre la foudre (1), ledit système de protection contre la foudre (1) comprenant un élément de fixation (4) destiné à fixer la structure interne (63) à la structure externe (62), le système de protection contre la foudre (1) étant apte à assurer la protection contre la foudre de zones entourant l'élément de fixation (4), le système (1) comprenant également au moins une couche conductrice (2, 3) à proximité de l'élément de fixation (4), **caractérisée en ce que** la couche conductrice (2, 3) est noyée dans la matrice dudit matériau composite et comprend des nanoparticules conductrices dispersées dans sa structure, les nanoparticules dispersées dans sa structure étant appliquées par un processus automatique en utilisant un système d'injection avec un collecteur mis à la terre, un mouvement relatif du collecteur étant réalisé par rapport au système d'injection intégré dans le processus, par empilage automatique, de fabrication de la structure externe de l'avion fait de matériau composite, et au moins l'une des couches conductrices (2, 3) comprenant une couche de microfibres de carbone superconductrices, produite par la graphitisation de nanofibres d'un polymère précurseur contenant des nanoparticules conductrices.

2. Structure d'avion selon la revendication précédente, dans laquelle les nanoparticules conductrices ont été dispersées dans une solution contenant une formulation de résine.

3. Structure d'avion selon l'une quelconque des revendications précédentes, dans laquelle la couche conductrice (3), au moins au nombre de une, est limitée à une zone autour de l'élément de fixation (4) pour disperser le courant de la foudre qui frappe l'élément de fixation (4) à travers l'ensemble du matériau composite.

4. Structure d'avion selon l'une quelconque des revendications précédentes, dans laquelle la couche conductrice (3), au moins au nombre de une, est une bande conductrice disposée le long d'une rangée d'éléments de fixation (4).

5. Structure d'avion selon l'une quelconque des revendications précédentes, dans laquelle au moins une couche conductrice (2, 3) comprend un matériau métallique sous la forme d'un treillis métallique.

6. Structure d'avion selon l'une quelconque des revendications précédentes, comprenant au moins deux couches conductrices (2, 3), une première couche conductrice externe (2) disposée sur sensiblement toute la surface externe du matériau composite, et une seconde couche conductrice (3) limitée à une zone autour de l'élément de fixation (4), au moins l'une des couches conductrices (2, 3) comprenant des nanoparticules conductrices dispersées dans sa structure.

7. Structure d'avion selon l'une quelconque des revendications précédentes, dans laquelle la matrice est une résine époxy.

8. Structure d'avion selon l'une quelconque des revendications précédentes, dans laquelle les nanoparticules conductrices sont choisies dans le groupe comprenant des grains d'argent, des nanosphères métalliques et des nanotubes de carbone.

9. Structure d'avion selon la revendication 1, dans laquelle les nanofibres polymères sont des nanofibres en polyacrylonitrile (PAN), les nanoparticules conductrices étant des nanotubes de carbone.

10. Structure d'avion selon l'une quelconque des revendications précédentes, comprenant en outre un dispositif de fixation isolant (60) prévu dans la partie interne de la structure interne (63) de l'avion, le dispositif de fixation (60) comprenant un écrou (61) recouvert de matériau isolant.

11. Structure d'avion selon la revendication 10, dans laquelle le dispositif de fixation (60) comprend en outre une couche isolante (66) séparant l'écrou (61) de la structure interne (63), conférant ainsi au système de protection contre la foudre (1) une double barrière d'isolation.

12. Structure d'avion selon l'une quelconque des revendications 10-11, dans laquelle l'écrou (61) est fixé à la structure interne (63) à l'aide de moyens de fixation (67).

13. Structure d'avion selon la revendication 11, dans laquelle l'écrou (61) est fixé à la couche isolante (66) à l'aide de moyens de fixation (67), la couche isolante (66) étant fixée à la structure interne (63) par des moyens de fixation supplémentaires (68).
